# EUROPEAN PATENT APPLICATION

(11) **EP 1 593 693 A1**
(43) Date of publication of application: **09.11.2005**
(21) Application number: 04711037.4
(22) Date of filing: 13.02.2004
(51) Int. Cl.: C08C 1/04, B60C 1/00, C08L 7/00

(54) **NATURAL RUBBER AND RUBBER COMPOSITION CONTAINING THE SAME**

(30) Priority: 13.02.2003 JP 2003034944
(71) Applicant: Bridgestone Corporation, Tokyo 104-8340 (JP)
(72) Inventor: MAEDA, Hiromi, c/o Bridgestone Corp. Tech. Center, Kodaira-shi, Tokyo 187 8531 (JP)
(74) Representative: Whalley, Kevin
(86) International application number: PCT/JP2004/001553
(87) International publication number: WO 2004/072119

(57) **Abstract**

This invention relates to a natural rubber improving the low heat buildup while maintaining the resistance to thermal aging inherent to the natural rubber as well as a rubber composition, and particularly to a natural rubber being a rubber made from a latex by partly removing protein from a natural rubber latex through a mechanical separation means in which a total nitrogen content in the rubber is more than 0.1% by mass but not more than 0.4% by mass, and a rubber composition comprising the natural rubber and a filler.

## Description

### TECHNICAL FIELD

This invention relates to a natural rubber and a rubber composition using the same, and more particularly to a natural rubber having an improved low heat buildup while maintaining an excellent aging resistance inherent to natural rubber and a method of producing the same as well as a rubber composition.

### BACKGROUND ART

In general, the natural rubber is known as a rubber having excellent mechanical properties and wear resistance. In the natural rubber is included about 6% of non-rubber components such as protein, saccharides and the like, which have an aging resistance or an effect of promoting vulcanization. It is revealed that a high polarity compound such as protein or the like is a component reducing heat buildup.

As a technique of reducing the heat buildup of the rubber, there have hitherto been conducted many attempts such as addition of an agent reducing loss tangent, improvement of carbon black dispersibility based on a polymer modification and the like. As a method of improving the low heat buildup of natural rubber is recently proposed a natural rubber highly deproteinized so as to render a total nitrogen content into not more than 0.1% by weight by adding proteolytic enzyme or bacteria to a latex to decompose protein (see page 3 of JP-A-6-329838). Also, there are made many proposals on the technique of deproteinizing natural rubber as an application for special uses such as natural rubber products for medical use and the like. Among them, there is proposed a natural rubber in which the non-rubber component such as protein or the like is further highly removed through proteolytic enzyme and a surfactant (see page 2 of JP-A-8-143606, page 2 of JP-A-11-71408 and the like).

On the other hand, it is demanded to more reduce the heat buildup of the natural rubber particularly used in tire constitutional members under a recent situation of saving energy.

When the protein is substantially completely removed from the natural rubber as is conventional, the low heat buildup and the processability are improved, but the non-rubber component having an anti-oxidant action and an action of promoting the vulcanization is removed substantially completely, so that there is a problem that the aging resistance is poor in the rubber composition using the conventional deproteinized natural rubber.

### DISCLOSURE OF THE INVENTION

Under the above situations, it is an object of the invention to provide a novel natural rubber improving the low heat buildup without damaging the aging resistance inherent to natural rubber and a method of producing the same. Also, it is another object of the invention to provide a rubber composition using this natural rubber and a tire using the same as a constitutional member.

The inventor has made various studies and found that it is effective to solve the above problem by carrying out the removal of protein included in the non-rubber component of a natural rubber latex through only a mechanical means such as centrifugal separation or the like without using a chemical means such as enzyme treatment or the like to adjust a total nitrogen content as an indication of protein to a particularly limited range, and as a result, the invention has been accomplished.

That is, the invention provides a natural rubber being a rubber made from a latex by partly removing protein from a natural rubber latex through a mechanical separation means in which a total nitrogen content in the rubber is more than 0.1% by mass but not more than 0.4% by mass.

Also, the invention provides a rubber composition comprising the above natural rubber and a filler and a tire using this rubber composition as a constitutional member.

Further, the invention provides a method of producing a natural rubber which comprises subjecting a natural rubber latex to a partial deproteinizing treatment at a centrifugal separation-concentration step so as to render a total nitrogen content in a solid component into more than 0.1% by mass but not more than 0.4% by mass and then subjecting to a solidification and drying treatment.

### BEST MODE FOR CARRYING OUT THE INVENTION

The natural rubber according to the invention is obtained in the usual natural rubber production steps, or steps of successively conducting tapping of latex, solidification, washing, dehydration, drying and packing by subjecting the latex after the tapping and before the solidification to a partial deproteining treatment through a mechanical separation means, preferably a centrifugal separation-concentration process so as to render the total nitrogen content in the solid component into a given range and then solidifying and drying the resulting natural rubber latex. The natural rubber latex as a starting material is not particularly limited, and a filed latex, commercially available latex and the like can be used.

The deproteinization of the natural rubber latex in the invention as mentioned above is required to be carried out by the mechanically centrifugal separation-concentration process. When the deproteinization is conducted by the other process such as a decomposition process using a proteolytic enzyme, a repetitive washing process using a surfactant, a process using the enzyme and the surfactant together or the like, the protein in the solid rubber decreases, but an effective component having an anti-oxidant action such as tocotrienol or the like is concurrently lost, so that the aging resistance inherent to the natural rubber lowers.

The total nitrogen content in the natural rubber according to the invention is an indication of protein content. Such a content can be controlled by adjusting centrifugal separation conditions of the starting natural rubber latex (revolution number, time and the like). In the production of the natural rubber product, it is required to adjust the total nitrogen content to more than 0.1% by mass but not more than 0.4% by mass. The centrifugal separation condition is not particularly limited, but it is preferable to repeat the operation at a revolution number of about 7500 several times. When the total nitrogen content is not more than 0.1% by mass, the aging resistance lowers, while when it exceeds 0.4% by mass, the low heat buildup is not obtained sufficiently. That is, after the total nitrogen content in the solid content of the centrifugal separation-concentrated latex is adjusted to more than 0.1% by mass but not more than 0.4% by mass, the solidification and drying are conducted, whereby protein is reduced and the low heat buildup is improved. The total nitrogen content is preferably within a range of 0.2-0.4% by mass.

In such an operation condition for the partial deproteinization, the anti-oxidant component such as tocotrienol or the like is not substantially lost unexpectedly, so that the heat resistance can be maintained at a level approximately equal to that of the conventional natural rubber.

The natural rubber according to the invention can be obtained by washing the rubber component obtained through the solidification of the above-treated latex and then drying with a usual drier such as vacuum drier, air drier, drum drier or the like.

As mentioned above, the natural rubber according to the invention can be produced by subjecting the starting natural rubber latex to the partial deproteinization treatment at the centrifugal separation-concentration step so as to render the total nitrogen content in the solid component into more than 0.1% by mass but not more than 0.4% by mass and then subjecting the resulting concentrated natural rubber latex to the solidification and drying treatments.

Next, the rubber composition according to the invention is preferable to contain at least 5% by mass of the above specified natural rubber as a rubber component. When the amount is less than 5% by mass, there may not be obtained a rubber composition having desired properties. A preferable content of the natural rubber is not less than 10% by mass.

As a rubber component used together with the above specified natural rubber are mentioned usual natural rubber and diene-based synthetic rubbers. As the diene-based synthetic rubber are mentioned, for example, styrene-butadiene copolymer rubber (SBR), polybutadiene (BR), polyisoprene (IR), butyryl rubber (IIR), ethylenepropylene copolymer rubber and a blend thereof.

Also, the filler compounded in the rubber composition according to the invention is not particularly limited, but the fillers usually used in the rubber industry such as carbon black, silica, alumina, aluminum hydroxide, clay, calcium carbonate and the like can be used. As the carbon black can be used carbon blacks of various grades such as SAF, HAF, ISAF, HAF, FEF, GPF and the like. The silica is not particularly limited, but wet silica, dry silica and colloidal silica are preferable. These fillers may be used alone or in a combination of two or more.

The total content of the fillers compounded is preferably 20-120 parts by mass, more preferably 40-80 parts by mass per 100 parts by mass of the rubber component.

Into the rubber composition according to the invention may be included various chemicals usually used in the rubber industry such as vulcanizing agent, vulcanization accelerator, process oil, antioxidant, scorch retarder, zinc oxide, stearic acid and the like within a range not damaging the object of the invention.

The rubber composition according to the invention can be used in not only the tire application but also the application for the other industrial goods such as rubber vibration isolator, belt, hose and the like. Particularly, it is preferably used as a rubber for a tire, and can be applied to any tire members such as tread rubber (including cap rubber, base rubber), side rubber, ply rubber, bead filler rubber and the like.

The following examples are given in illustration of the invention and are not intended as limitations thereof.

### <Examples>

Various measurements are carried out by the following methods.

### (1) Measurement of total nitrogen content

A latex is solidified with an acid and dried to obtain a solid component (sample), which is precisely weighed to measure total nitrogen content through a Kjeldahl method and determine a ratio to the solid component (mass%).

### (2) Tan δ (dynamic loss)

Tan δ (50°C) is measured at a temperature of 50°C, a strain of 5% and a frequency of 15 Hz using a viscoelastic measuring device (made by Rheometrix Corporation) and represented as (tan δ of Comparative Example 1/tan δ of Example) x 100. The larger the value, the lower the heat buildup.

### (3) Resistance to thermal aging

It is represented by a percentage obtained by dividing a tensile strength after the thermal aging at 100°C for 72 hours by a tensile strength before the thermal aging. The larger the value, the better the resistance to thermal aging.

### Production Example 1 (Production of natural rubber (a))

A natural rubber latex (CT-1) added with 0.4% by mass of ammonia is concentrated by centrifugal separation at a revolution number of 7500 rpm for 15 minutes through a latex separator SLP-3000 (made by Saito Enshinki Kogyo Co., Ltd.). The concentrated latex is further subjected to a centrifugal separation at a revolution number of 7500 rpm for 15 minutes. The thus concentrated latex is diluted so as to be about 20% of a solid content, and added with formic acid and left to stand over a night. The thus solidified rubber component is dried at 110°C for 210 minutes to prepare a trial natural rubber (a). The total nitrogen content of the resulting rubber is 0.15 mass%.

### Production Example 2 (Production of natural rubber (b))

A trial natural rubber (b) is prepared under the same conditions as in Production Example 1 except that the centrifugal separation is conducted for 15 minutes and the thus concentrated latex is thermally solidified by a drum drier (drum temperature: 130°C and dried. The total nitrogen content of the resulting rubber is 0.15 mass%.

### Examples 1, 2 and Comparative Example 1

A rubber composition is prepared by using the trial natural rubbers (a), (b) obtained in Production Examples 1 and 2 and a usual natural rubber (RSS#3 masticated rubber) and milling according to a compounding recipe shown in Table 1 in a usual manner.

**Table 1**

| Composition compounded | parts by mass |
|---|---|
| Natural rubber | 100 |
| Carbon black N110 | 50 |
| Resin | 5 |
| Stearic acid | 2 |
| Antioxidant 6C^{*1} | 1 |
| Zinc oxide | 3 |
| Vulcanization accelerator CZ^{*2} | 0.8 |
| Sulfur | 1 |

| | |
|---|---|
| *1 Antioxidant 6C: N-phenyl-N-1,3-dimethylbutyl-p-phenylene diamine | |
| *2 Vulcanization accelerator CZ: N-cyclohexyl-2-benzothiazolyl sulfenamide | |

The rubber composition is vulcanized under conditions of 145°C and 33 minutes, and the low heat buildup and resistance to thermal aging of the vulcanized rubber are evaluated. The results are shown in Table 2.

**Table 2**

| Evaluation of rubber composition | Example 1 | Example 2 | Comparative Example 1 |
|---|---|---|---|
| Kind of natural rubber | Trial natural rubber (a) | Trial natural rubber (b) | Natural rubber (RSS#3) |
| Low heat buildup (index) | 110 | 105 | 100 |
| Resistance to thermal aging (index) | 100 | 100 | 100 |

As seen from the above, the rubber compositions using the trial natural rubbers (a), (b) of Examples 1, 2 are considerably excellent in the low heat buildup without substantially lowering the resistance to thermal aging as compared with Comparative Example 1.

### INDUSTRIAL APPLICABILITY

According to the invention, there can be provided natural rubbers largely improving the low heat buildup while substantially maintaining the resistance to thermal aging inherent to the natural rubber. Also, the composition comprising the natural rubber according to the invention is applicable to various industrial rubber products, and particularly it can be preferably used in tires.

## Claims

1. A natural rubber **characterized by** a rubber made from a latex by partly removing protein from a natural rubber latex through a mechanical separation means in which a total nitrogen content in the rubber is more than 0.1% by mass but not more than 0.4% by mass.

2. A natural rubber according to claim 1, wherein it is a rubber made from a latex by partly removing protein from a natural rubber latex through a mechanical separation means in which a total nitrogen content in the rubber is 0.2-0.4% by mass.

3. A natural rubber according to claim 1 or 2, wherein the mechanical separation means is a centrifugal separation-concentration method.

4. A rubber composition comprising a natural rubber as claimed in any one of claims 1 to 3 and a filler.

5. A tire using a rubber composition as claimed in claim 4 as a constitutional member.

6. A method of producing a natural rubber which comprises subjecting a natural rubber latex to a partial deproteinizing treatment at a centrifugal separation-concentration step so as to render a total nitrogen content in a solid component into more than 0.1% by mass but not more than 0.4% by mass and then subjecting to a solidification and drying treatment.

## Amended claims

### Amended claims under Art. 19.1 PCT

**1.** amended) A rubber composition comprising a natural rubber being a rubber made from a latex by partly removing protein from a natural rubber latex through a mechanical separation means, in which a total nitrogen content in the rubber is more than 0.1% by mass but not more than 0.4% by mass, and a filler.

**2.** amended) A natural rubber **characterized by** a rubber made from a latex by partly removing protein from a natural rubber latex through a mechanical separation means in which a total nitrogen content in the rubber is 0.2-0.4% by mass.

**3.** amended) A natural rubber according to claim 1, wherein the mechanical separation means is a centrifugal separation-concentration method.

**4.** amended) A natural rubber according to claim 2, wherein the mechanical separation means is a centrifugal separation-concentration method.

**5.** amended) A tire using a rubber composition as claimed in claim 1 or 3 as a constitutional member.

**6.** amended) A method of producing a natural rubber which comprises subjecting a natural rubber latex to a partial deproteinizing treatment at a centrifugal separation-concentration step so as to render a total nitrogen content in a solid component into not less than 0.15% by mass but not more than 0.4% by mass and then subjecting to a solidification and drying treatment.
